# EUROPEAN PATENT APPLICATION

(11) **EP 2 100 543 A1**
(43) Date of publication of application: **16.09.2009**
(21) Application number: 08251527.1
(22) Date of filing: 25.04.2008
(51) Int. Cl.: A47J 27/00, A47J 36/02

(54) **Foldable stovetop cookware and method of production**

(30) Priority: 14.03.2008 US 75938
(71) Applicant: Fung, Duncan C., Richmond, Virginia 23230 (US)
(72) Inventor: Fung, Duncan C., Richmond, Virginia 23230 (US)
(74) Representative: Wombwell, Francis

(57) **Abstract**

A foldable or collapsible stovetop container (70) that maintains a rigid shape while in use and can be folded into a smaller size for storage. The stovetop container (70) includes rigid top (84) and bottom (80) portions separated by a flexible middle portion (82). The flexible middle portion (82) includes thin wall sections (100) that form predetermined bend areas. Pressure applied to the top portion causes the flexible middle portion (82) to collapse in an orderly manner toward the bottom portion (80), with the middle portion (82) folding at each of the predetermined bend areas to create one or more folds or pleats in the middle portion in the collapsed configuration. The foldable stovetop container (70) may be used on residential stovetops for the heating and cooking of food.

## Description

This application is a Continuation-In-Part of U.S. Patent Application Serial No. 11/590,574 filed October 31, 2006 and still pending, the entire contents of which are incorporated herein in their entirety by reference thereto.

### Field of the Invention

The present invention relates to cooking containers and particularly to a stovetop container or cookware that includes an elastomeric portion that enables the container to be folded or collapsed when not in use to enable easy and more efficient storage.

### Background of the Invention

U.S. Patent Application Serial No. 11/590,574, filed on October 31, 2006, disclosed a foldable ovenware container and method of production. That disclosure described a collapsible ovenware container which maintained a rigid shape while in use and which could be folded into a smaller size for storage. The ovenware container included a rigid top and a rigid bottom portion separated by a flexible middle portion. The flexible middle portion includes thick and thin wall sections. Pressure applied to the top portion causes the flexible middle portion to collapse in an orderly manner toward the bottom portion, with the middle portion folding at each of the thin wall sections to create a plurality of folds or pleats in the middle portion in the collapsed configuration.

Although the aforementioned application provided a solution for reducing the required storage space for ovenware containers, there is also a need for reducing the required storage space for stovetop containers used on residential stovetops. A typical residential kitchen contains a large number of stovetop container cooking containers, such as pots and pans, of varying sizes and shapes. As a result of their rigid construction, conventional stovetop containers typically occupy a significant amount of space in the kitchen. All kitchens, especially residential kitchens that are typically limited in space, would benefit from a stovetop container that occupies less storage space when not in use.

What is needed in a residential kitchen therefore is a stovetop container that maintains a rigid shape when in use and that can be collapsed to a smaller size when not in use to conserve storage space.

### Summary of the Invention

According to the present invention, there is provided for residential kitchens a collapsible stovetop container which maintains a rigid shape while in use and which can be collapsed or folded into a smaller size for storage. The stovetop container includes rigid top and bottom portions separated by a flexible middle portion. The flexible middle portion includes thick and thin wall sections. Pressure applied to the top portion causes the flexible middle portion to collapse in an orderly manner toward the bottom portion, with the middle portion folding at each of the thin wall sections to create a plurality of folds or pleats in the middle portion in the collapsed configuration.

### Objects and Advantages

Several advantages are achieved with the stovetop container of the present invention, including:
(1) The foldable stovetop container of the present invention has the advantage that it can be folded into a significantly smaller size for storage thereby greatly reducing the amount of required storage space.
(2) The foldable stovetop container of the present invention maintains its shape when expanded to its unfolded state.
(3) In its expanded state, the stovetop container of the present invention is capable of supporting unstable foods such as liquids or batters without collapse caused by errant bumping or jostling by a handler.
(4) Unlike soft or structurally weak stovetop containers, the foldable stovetop container of the present invention does not need to be supported by a separate pan or other rigid object when being moved from one location to another.
(5) The foldable stovetop container of the present invention can be used on all high temperature stovetop burners including electrical, gas, induction, and direct fire.

These and other objects and advantages of the present invention will be better understood by reading the following description along with reference to the drawings.

### Description of the Drawings

Fig. 1 is a side view of the preferred embodiment of a foldable stovetop container according to the present invention.

Fig. 2 is a side view of the foldable stovetop container of Fig. 1 after it has been folded into a compact size for storage.

Fig. 3 is a top view of the foldable stovetop container of Fig. 1.

Fig. 4 is a sectional view of the foldable stovetop container taken along line 4-4 of Fig. 3.

Fig. 5 is a sectional view of the stovetop container of Fig. 4 after it has been folded or collapsed.

Fig. 6 is a sectional view of a wall portion with teeth formed therein to define a predetermined bend line in the foldable stovetop container of the present invention and the resultant bent wall portion.

Fig. 7 is a sectional view of a wall portion with thin wall portions formed therein to define predetermined bend lines in the foldable stovetop container of the present invention and the resultant bent wall portion.

Fig. 8 is a sectional view of a wall portion with arcuate depressions formed therein to define a predetermined bend line in the foldable stovetop container of the present invention and the resultant bent wall portion.

Fig. 9 is a conceptual view depicting the top, middle, and bottom portions exploded apart to simulate the various portions being bonded together in a mold.

Fig. 10 is a sectional view of a second embodiment of a foldable stovetop container according to the present invention.

Fig. 11 is a sectional view of the stovetop container of Fig. 10 after it has been folded or collapsed.

Fig. 12 is a side view of a third embodiment of a foldable stovetop container according to the present invention.

Fig. 13 is a sectional view of a part of the middle portion of the foldable stovetop container taken along line 13-13 of Fig. 12.

Fig. 14 is a conceptual sectional view depicting the left portion of the foldable stovetop container of Fig. 12 in its folded state.

### Table of Nomenclature

The following is a listing of part numbers used in the drawings along with a brief description:

| Part Number | Description |
|---|---|
| 70 | foldable stovetop container, preferred embodiment |
| 72 | bottom |
| 74 | sides |
| 76 | top rim |
| 78 | handle |
| 80 | bottom portion |
| 82 | middle portion |
| 84 | top portion |
| 86 | outer surface of middle portion |
| 88 | bend area |
| 88A | top bend area |
| 88B | bottom bend area |
| 90 | neck portion of handle |
| 92 | insulated portion of handle |
| 94 | inner surface of middle portion |
| 96 | rim extension or tab |
| 98 | indentation or stress relief cutout |
| 100 | thin wall section |
| 102 | wall |
| 104 | fold around top bend area |
| 105 | fold around bottom bend area |
| 106 | arcuate-shaped cutout |
| 108 | top bonding area |
| 110 | bottom bonding area |
| 112 | bottom edge of top portion |
| 114 | top edge of bottom portion |
| 120 | foldable stovetop container, second embodiment |
| 122 | vertical side of bottom portion |
| 124 | vertical side of top portion |
| 130 | foldable stovetop container, third embodiment |
| 132 | sidewalls of middle portion |
| 134 | groove |
| 136 | rib |
| *D1* | distance bottom portion extends from bottom |
| *D2* | inner diameter of top portion |
| *D3* | outer diameter of bottom portion |
| *T3* | wall thickness of middle portion |
| Θ*1* | slope of sides with respect to bottom |

### Detailed Description

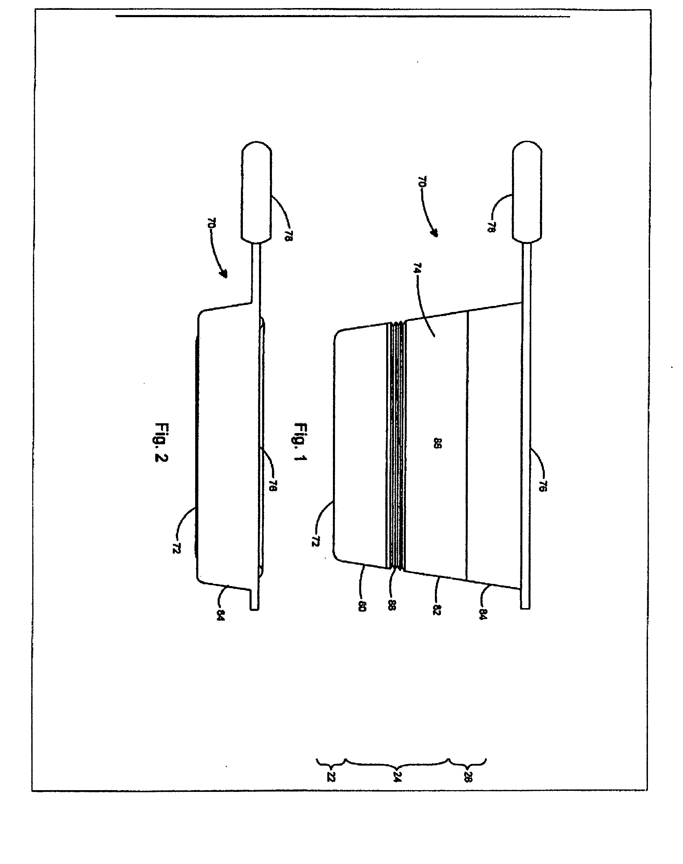

With reference to a first and preferred embodiment in Fig. 1, the present invention is a foldable or collapsible stovetop container 70 and a method for its production. The stovetop cookware or container 70 includes a bottom 72, sides 74, a top rim 76, and a handle 78. The sides 74 include a bottom portion 80, middle portion 82, and top portion 84. The middle portion 82 of the foldable stovetop container 70 includes an outer surface 86 and may include one or more bend areas 88 extending linearly along the middle portion 82 and parallel with the top rim 76 and bottom 72. As will be described herein with reference to a preferred embodiment, the foldable stovetop container 70 depicted in Fig. 1 may be folded so that it may occupy a smaller profile for storage as shown in Fig. 2.

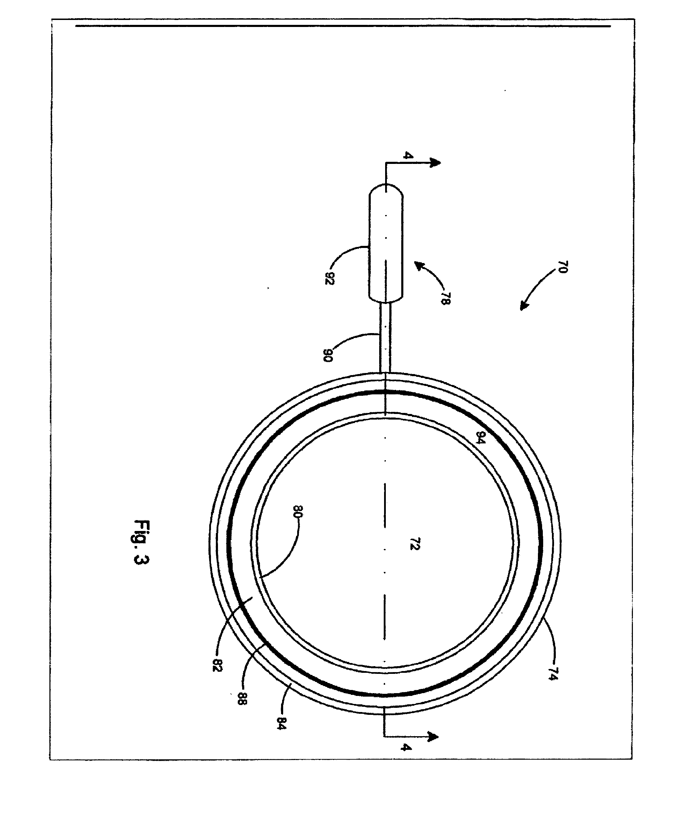

Referring to Fig. 3, the bottom 72 and sides 74 of the foldable stovetop container 70 are preferably a circular shape as shown, although the stovetop container 70 could be formed in other shapes such as elliptical, hexagonal, or octagonal without departing from the scope of the invention. A circular shaped container 70 is preferable as it will be used to cook or heat food on a conventional stovetop burner (not shown) which is typically circular in shape. The handle 78 typically includes a neck portion 90 connecting it to the top portion 84 of the container 70 and an insulated portion 92. The sides 74 of the middle portion 82 of the foldable container 70 include an inner surface 94 and the inner surface 94 may also include a bend area 88.

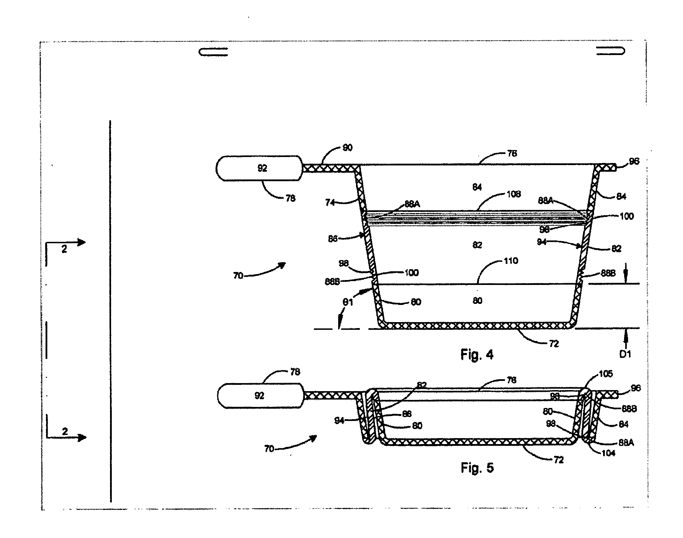

With reference to the preferred embodiment of the foldable stovetop container 70 in Fig. 4, the bottom portion 80 and top portion 84 are preferably rigid and the middle portion 82 is flexible. The handle 78 extends from the rigid top portion 84 and is secured thereto by conventional means such as fasteners, rivets, or welding (not shown). Although the handle 78 is shown in the preferred embodiment as extending from the top portion 84, it could also be connected to the bottom portion 80 if desired. For stability purposes and ease of handling, the handle 78 is secured to the top portion 84 of the foldable stovetop container 70 as shown in Fig. 4. Furthermore, if desired, the foldable stovetop container 70 could include more than one handle or could include integral rim extensions or tabs 96 extending from the top rim 76 to facilitate handling of the stovetop container 70. The insulated portion 92 of the handle 78 is provided for ease in transporting and for safe handling of the stovetop container 70 when it is hot.

As stated herein, the bottom portion 80 and top portion 84 of the foldable stovetop container 70 are of rigid construction. Preferably, the bottom 80 and top 84 portions are constructed of metal, ceramic, or glass. The bottom portion 80, which will be in direct contact with a stovetop burner, must additionally be constructed of non-combustible material. Appropriate metals for construction of the bottom and top portions include aluminum, steel, copper, and ferromagnetic metals such as iron and iron alloys. The metals described herein for construction of the top 84 and bottom 80 portions of the stovetop container 70 are selected for their excellent heat conduction properties. Although the preferred embodiment of the foldable stovetop container 70 in Fig. 4 is depicted with aluminum top 84 and bottom 84 portions, it is within the scope of the invention to construct the bottom portion 80 of one material and the top portion 84 of a separate material. For example, the bottom portion 80 could be constructed of copper for its excellent heat conduction properties and the top portion 84 could be constructed of steel. As heat conduction is typically not as important in the top portion 84 as the bottom portion 80, and copper is more expensive than steel, it may be preferable to form the top portion 84 of steel.

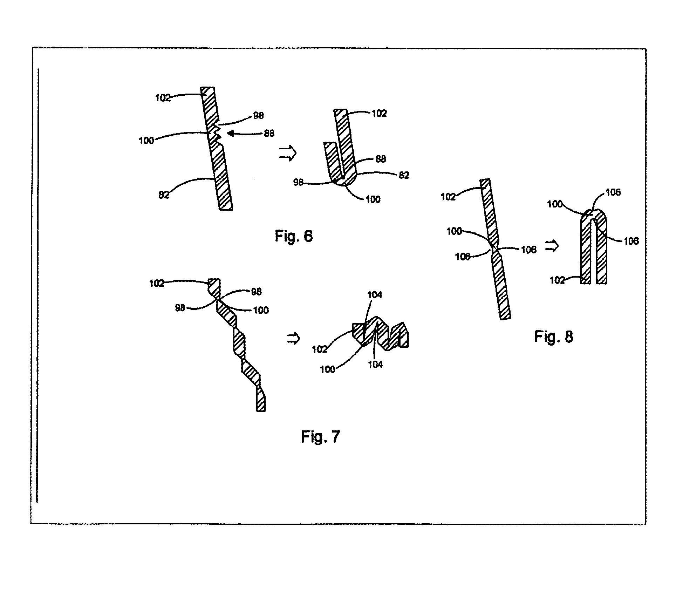

The middle portion 82 is preferably formed of a flexible material such as an elastomer and should be heat resistant. An especially preferred material of construction for the middle portion 82 is silicone rubber. As the middle portion 82 of the stovetop container 70 will be in direct contact with food, the silicon rubber used to form the middle portion 82 is preferably food grade silicone rubber. As shown in Fig. 4, the middle portion 82 of the preferred embodiment includes a top bend area 88A and a bottom bend area 88B. The top bend area 88A includes one or more indentations or stress relief cutouts 98 in the inner surface 94 of the middle portion 82 that form one or more thin wall sections 100 therein in the sides 74 of the container 70. In a similar manner, the bottom bend area 88B includes one or more cutouts or indentations 98 in the sides 74 but with the cutouts 98 formed in the outer surface 86 of the middle portion 82. The cutouts 98 and thin wall sections 100 are depicted in more detail in Fig. 6.

With reference to Figs. 4 and 5, as a result of the flexible material of construction of the middle portion 82 and the inclusion of predetermined bend areas 88A and 88B therein, the foldable stovetop container 70 may be folded from an expanded state as shown in Fig. 4 to a folded or collapsed state as shown in Fig. 5. Since a typical kitchen includes a wide variety of stovetop cookware, the present invention provides a cookware container 70 that can be folded into a compact profile to reduce storage space requirements. The stovetop container 70 of the present invention may be folded by simply pressing down on the top rim 76 of the container. Forming the cutouts 98 of top bend area 88A in the inner surface 94 of the flexible middle portion 82 enables the stovetop container 70 to fold inward around top bend area 88A thereby placing the cutouts 98 of top bend area 88A inside the bend or fold 104 as shown in Fig. 5. Conversely, by forming the cutouts 98 of the bottom bend area 88B in the outer surface 86 of the middle portion 82, enables the stovetop container 70 to fold outward around bottom bend area 88B. As shown in Fig. 5 depicting the folded container 70, the cutouts 98 of bottom bend area 88B are inside the fold 105. Thus the folding direction of the foldable stovetop container 70 can be controlled by selecting the surface, inner 94 or outer 86, that the cutouts 98 are placed on. The foldable stovetop container 70 of the present invention is therefore constructed to fold in an orderly and repeatable manner by placing cutouts 98 or similar modifications in the appropriate surfaces 86 or 94 of the flexible middle portion 82. Furthermore, as the sides are formed of flexible heat resistant silicone rubber, the stovetop container 70 of the present invention may be folded and expanded numerous times without affecting the cooking performance of the container or cookware.

As shown in Figs. 7 and 8, thin wall sections 100 may be formed in the walls 102 of the flexible middle portion 82 by other means including V-shaped cutouts 98 in alignment with each other on opposite sides of the walls 102 (see Fig. 7) or aligned arcuate-shaped cutouts 106 on opposite sides of the walls 102. The fold direction may be controlled by the size of the cutouts and, as shown in Fig. 4, by the slope (angle Θ*1*) of the sides 74 of the foldable stovetop container 70 with respect to the bottom 72. Preferably angle Θ*1* is 89 degrees or less.

Referring to Fig. 4, the foldable stovetop container 70 includes a top bonding area 108 between the top portion 84 and the middle portion 82 and a bottom bonding area 110 between the bottom portion 80 and the middle portion 82. As a safety factor, it is highly preferred that the bottom portion 80 extend at least one inch from the bottom 72 of the stovetop container 70 as shown by distance *D1* in Fig. 4. Conventional stovetop burners typically heat to a temperature significantly higher than 250 degrees C. Silicone rubber ages and becomes brittle if it reaches 250 degrees C or higher. Therefore, to prevent heat-age failure the bottom bonding area 110 of the foldable stovetop container 70, it is highly preferred that the bottom portion 80 extend at least 1.0 inch from the container bottom 72 to ensure the integrity of the foldable container 70 during the cooking process. By providing the minimum distance *D1* as shown in Fig. 4, a foldable cooking container 70 will retain its integrity during the cooking process even at the highest temperature settings of convention stovetop burners.

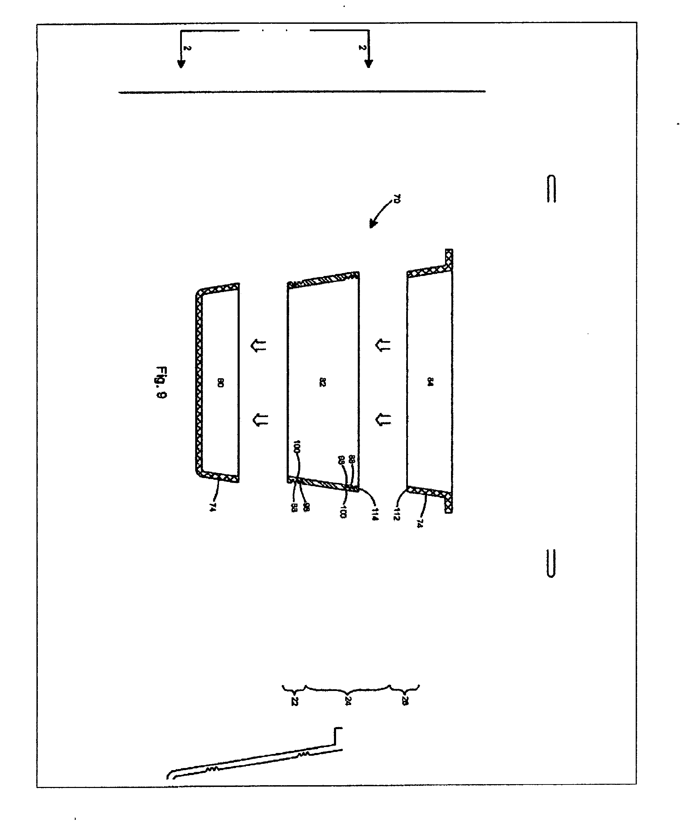

With reference to Fig. 9, the foldable stovetop container 70 of the present invention is produced by first forming a top portion 84 and a bottom portion 80 by conventional means. The top potion 84 and bottom portion 80 depicted in Fig. 9 are formed of aluminum but could also be formed of other metals, ceramic, or glass. For a foldable stovetop container that will be used with an induction stovetop element, the bottom portion 80 will be constructed of a magnetic metal. To insure good bonding during the molding process between the silicone rubber middle portion 82 and the metal top 84 and bottom 80 portions, the bottom edge 112 of the top portion 84 and the top edge 114 of the bottom portion 80 are coated with a silicone primer (not shown) such as Primer-No. 24T available from Shin-Etsu Silicones of America, Akron, Ohio. The Primer-No. 24T is an organopolysiloxane mixture. If a material other than metal were used for the top 84 and bottom 80 portions, such as ceramic or glass, an alternate silicone primer may be required as the primers are typically formulated for specific materials, although primer is not necessary for bonding silicone rubber to many ceramic and glass materials Any silicone primer used must be non-toxic and rated acceptable as a food grade material. The inner surface of the mold includes extensions, which may be teeth or semicircular tabs, around the inner periphery of the mold. The purpose of the extensions is to form the thin wall sections in the foldable container. The top 84 and bottom 80 portions are then placed in the chamber of a precision mold (not shown) and the mold is closed thereby shutting off the location. Shutting off the location insures that the ingredients including the top portion 84 and the bottom portion 80 are tightly held within the mold and that there is no space for seepage of silicone rubber around the sides 74 of the metal portions 80 and 84. The mold is constructed to form the truncated cone shaped middle portion 82 depicted in Fig. 9. Silicone rubber in either liquid or gum form is injected into the precision mold and the silicone rubber fills the precision mold cavity that extends between the top 84 and bottom 80 portions. After charging with silicone rubber, heat and pressure are applied to the precision mold to cure the silicone rubber and bond the top 84 and bottom 80 portions to the silicone rubber middle portion 82. The inner surface of the precision mold (not shown) is shaped to form the bend areas 88, stress relief cutouts 98, and thin wall sections 100 at the desired locations. The curing cycle preferably includes between 4 and 13 minutes of curing time at a pressure of between 120 and 180 kg force per cm² and at a cure temperature of between 140 and 200 degrees Celsius. The parameters of the curing cycle are varied according to the size of container, the grade of uncured silicone rubber introduced to the mold, the thickness of the container, the amounts and types of additives within the uncured silicone rubber composition, and various other factors. After the curing cycle is complete, the bonded bottom portion 80, middle portion 82, and top portion 84 are removed from the mold and a handle (not shown) is secured to the top portion 84 by conventional fastening methods to form a foldable stovetop container 70 according to the present invention. If the top portion 84 and bottom portion 80 are constructed of glass, the glass is preferably tempered or borosilicate glass, which can withstand high temperatures.

Silicone rubber can be formulated in various hardness levels by controlling the amount of filler added to the silicone rubber composition prior to introducing the silicone rubber to the mold. As an alternative, various silicone rubber formulations are specifically formulated by manufacturers with precise filler levels to achieve a specified hardness, and these are commercially available. Preferably, the middle portion 82 of the foldable stovetop container 70 includes a Shore A hardness of between 30 and 75 to ensure that the middle portion 82 is flexible, holds its shape and integrity when expanded, and folds properly at the designated bend areas 88. There is no restriction on the thickness of the middle portion 82 versus the top 84 and bottom 80 portions as a middle portion 82 having a higher Shore A hardness and thinner walls could easily maintain its integrity equal to a middle portion 82 having a lower Shore A hardness and thicker walls. The foldable stovetop container of the present invention may be used on any conventional stovetop including direct fire, electricity, gas, or induction. For use on induction stoves however, the bottom portion 80 should be formed of a magnetic metal to enable the container to absorb the magnetic energy emitted by the induction heating element.

To operate the present invention, the foldable stovetop container or cookware 70 is normally folded into its collapsed configuration as shown in Fig. 2. In the folded or collapsed configuration, the cookware 70 takes up very little space and therefore enhances the ability of a homeowner to store a larger number of cookware pieces. To prepare the foldable stovetop container 70 for cooking, the cook simply pulls up on the handle 78 or top rim 76 and the stovetop container 70 expands to its expanded or open configuration shown in Fig. 1. As the silicone rubber middle portion 82 is flexible, tough, and extremely resilient, the stovetop container 70 may be expanded and folded repeated times without failure at the bend areas 88.

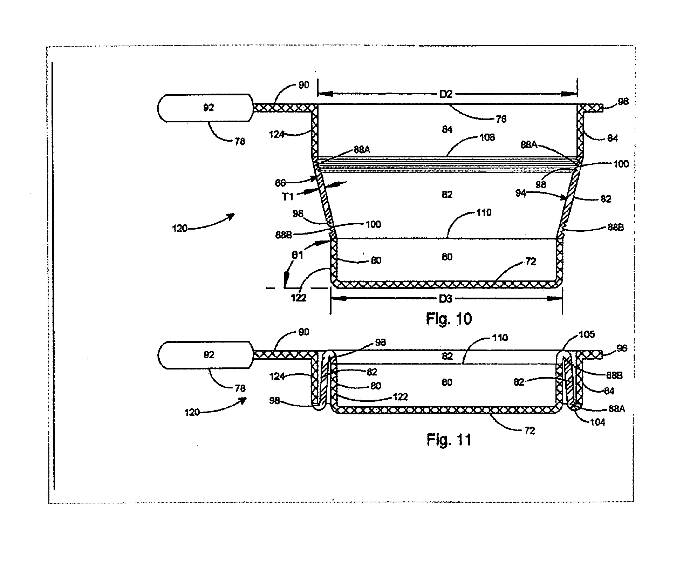

With reference to Figs. 10 there is shown a second embodiment of the foldable stovetop container 120 of the present invention in its expanded configuration. The stovetop container 120 includes a rigid top portion 84, rigid bottom portion 80, and a flexible middle portion 82 similar to the first embodiment. Unlike the first embodiment, which included sides that sloped outward from the bottom to the top rim, the second embodiment of the foldable stovetop container 120 includes vertical sides 122 on the bottom portion 80 and vertical sides 124 on the top portion 84. Angle Θ*1* of the sides 122 of bottom portion 80 with respect to the bottom 72 of the container is therefore 90 degrees. The flexible middle portion 82 is sloped outwards and includes bend areas 88A and 88B with stress relief cutouts 98 and thin wall sections 100 to enable the foldable container 120 to be folded along the bend areas 88A and 88B. Preferably, in the second embodiment of the foldable stovetop container 120, the inner diameter *D2* of the top portion 84 is equal to or greater than the outer diameter *D3* of the bottom portion 80 plus the wall thickness *T1* of the middle portion 82, which enables the top portion 84 to fold over the bottom portion 80 with enough clearance for the middle portion 82 to fit between the top 84 and bottom 80 portions in the folded state. The second embodiment of the foldable stovetop container 120 is shown in its folded configuration in Fig. 11.

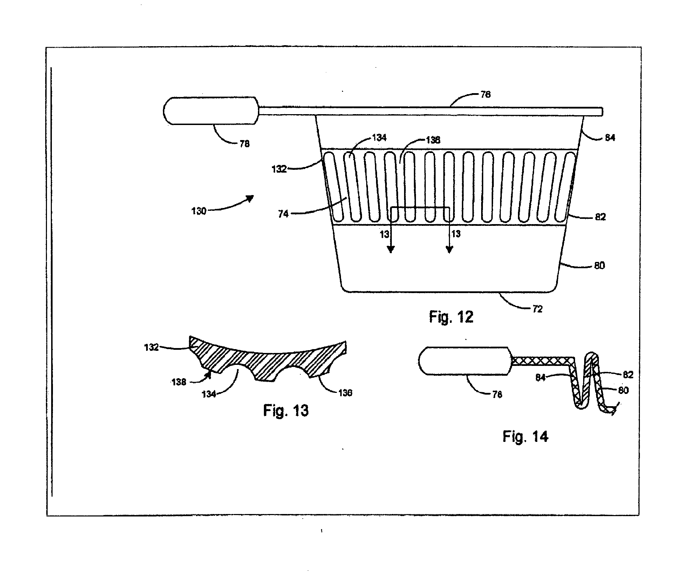

A third embodiment of the foldable stovetop container 130 in an expanded configuration is depicted in Fig. 12. As shown in Figs. 12 and 13, the sidewalls 132 of the flexible middle portion 82 include thin wall portions or grooves 134 and thick wall portions or ribs 136. Providing ribs 136 and grooves 134 on the third embodiment of the foldable stovetop container 130, as shown in Fig. 12, increases the vertical strength of the flexible middle portion 82 and enables the middle portion 82 to be constructed with a softer silicone rubber. The left portion of the foldable stovetop container 130 of Fig. 12 is shown in its folded state in Fig. 14.

As the invention has been described, it will be apparent to those skilled in the art that the same may be varied in many ways without departing from the spirit and scope of the invention. Any and all such modifications are intended to be included within the scope of the appended claims.

## Claims

1. A foldable stovetop container comprising:
a rigid bottom portion;
a flexible middle portion extending from said bottom portion;
a rigid top portion extending from said middle portion;
at least one thin wall section in said middle portion defining a bend area thereon,
whereby said foldable stovetop container is capable of being folded at said bend area to convert said container from an expanded profile to a reduced profile.

2. The foldable stovetop container of claim 1 wherein said middle portion is constructed of a heat resistant elastomer.

3. The foldable stovetop container of claim 2 wherein said heat resistant elastomer is silicone rubber.

4. The foldable stovetop container of claim 3 wherein said silicone rubber is non-toxic food grade silicone rubber.

5. The foldable stovetop container of claim 1 wherein said middle portion of said stovetop container includes a Shore A hardness of between 30 and 75.

6. The foldable stovetop container of claim 1 wherein
said bottom portion is constructed of non-combustible material; and
said top portion and said bottom portion are selected from the group consisting of metal, ceramic, and glass.

7. The foldable stovetop container of claim 1 wherein
said top portion and said bottom portion are constructed of metal; and
said metal is selected from the group consisting of aluminum, steel, copper, and ferromagnetic metal.

8. The foldable stovetop container of claim 7 wherein said ferromagnetic metal includes iron and iron alloys.

9. The foldable stovetop container of claim 1 including a handle secured to said top portion.

10. The foldable stovetop container of claim 1 wherein
said bottom portion includes a bottom and sides; and
said sides of said bottom portion extend upward from said bottom by at least 1.0 inch.

11. The foldable stovetop container of claim 1 wherein
said middle portion includes a side wall with an inner surface and an outer surface;
said thin wall section includes an indentation in at least one of said inner and outer surfaces; and
said indentation is V-shaped or arcuate-shaped.

12. The foldable stovetop container of claim 1 wherein
said middle portion includes a side wall with an inner surface and an outer surface; and
said thin wall section includes a cut on each of said inner and outer surfaces; and
said cuts on said inner and outer surfaces of said side wall are in alignment with each other.

13. The foldable stovetop container of claim 1 wherein
said top portion, said middle portion, and said bottom portion are bonded together in a mold at conditions of pressure and elevated temperature;
said pressure is between 120 and 180 kg force per cm²; and
said elevated temperature is between 140 and 200 degrees Celsius.

14. A method of forming a foldable stovetop container including the steps of:
providing a rigid bottom portion including a top edge;
providing a rigid top portion including a bottom edge;
coating said bottom edge of said top portion and said top edge of said bottom portion with a non-toxic silicone primer;
providing a precision mold including an inner surface with an inner periphery for accepting said bottom portion, said top portion, and a space between said bottom portion and top portion;
providing teeth extending around said inner periphery of said inner surface of said mold;
closing said mold thereby shutting off the location and creating a substantially cylindrical-shaped cavity between said top portion and said bottom portion;
injecting an uncured liquid or gel silicone rubber composition into said precision mold;
applying pressure and high temperature to said precision mold and maintaining said pressure and high temperature for a period of time thereby curing said uncured silicone rubber in said mold and forming said foldable container including a cured flexible middle container portion bonded to said rigid top portion and said rigid bottom portion; and
removing said foldable container from said mold, said middle portion of said foldable container including thin wall sections formed by said teeth of said mold, said thin wall sections forming bend areas around which said middle portion of said foldable container can be folded.

15. The method of claim 14 wherein said uncured silicone rubber composition includes sufficient hardener agent therein to provide said flexible middle portion after curing with a Shore A hardness of between 30 and 75.

16. The method of claim 14 wherein
said temperature is between 140 and 200 degrees Celsius;
said pressure is between 120 and 180 kg force per cm²; and
said period of time is between 4 and 13 minutes.

17. The method of claim 14 wherein
said rigid bottom portion is constructed of a non-combustible material selected from the group consisting of metal, ceramic, and borosilicate glass; and
said rigid top portion is selected from the group consisting of metal, ceramic, or borosilicate glass.

18. The method of claim 14 wherein said silicone primer is an organopolysiloxane mixture.

19. The method of claim 14 wherein said uncured silicone rubber is a non-toxic food grade silicone rubber.
